# EUROPÄISCHE PATENTSCHRIFT

(11) **EP 0 906 928 B1**
(45) Veröffentlichungstag und Bekanntmachung des Hinweises auf die Patenterteilung: **02.01.2003**
(21) Anmeldenummer: 98118312.2
(22) Anmeldetag: 25.09.1998
(51) Int. Cl.: C08G 65/20, C08G 65/32, C08G 65/30, B01J 19/00

(54) **Kontinuierliche Herstellung von Polytetrahydrofuran über eine Umesterungskaskade mit gezielter Schaumzerstörung**
Continuous production of polytetrahydrofuran in a transesterification cascade with controlled foam-suppression
Production continue de polytétrahydrofuran dans une cascade de transestérification avec suppression de mousse contrôlée

(30) Priorität: 25.09.1997 DE 19742342
(43) Veröffentlichungstag der Anmeldung: 07.04.1999
(73) Patentinhaber: BASF AKTIENGESELLSCHAFT, 67056 Ludwigshafen (DE)
(72) Erfinder: Auer, Heinz, 68809 Neulussheim (DE); Beiser, Klaus, 55234 Eppelsheim (DE); Ciprian, Jürgen, Dr., 67071 Ludwigshafen (DE); Franz, Lothar, Dr., 67112 Mutterstadt (DE); Franzischka, Wolfgang, Dr., 67227 Frankenthal (DE); Pessel, Ulrich-Dieter, 69118 Heidelberg (DE); Weinle, Werner, 67159 Friedelsheim (DE)
(74) Vertreter: Isenbruck, Günter, Dr.

(56) Entgegenhaltungen:
- WO-A-97/23559
- DE-A- 3 123 300
- DE-B- 1 248 943
- US-A- 4 230 892
- US-A- 4 367 331

## Beschreibung

Die Erfindung betrifft ein Verfahren zur Herstellung hydroxylgruppenhaltiger Polymere, insbesondere zur Herstellung von Polytetrahydrofuran mit endständigen Hydroxylgruppen, aus den entsprechenden acyloxygruppenhaltigen Polymeren durch Umesterung mit Alkoholen, das in zumindest einem Rührkessel kontinuierlich durchgeführt wird.

Polytetrahydrofuran, im folgenden kurz als PTHF bezeichnet, wird üblicherweise unter Verwendung kationischer Katalysatorsysteme aus Tetrahydrofuran hergestellt, wobei ein Polytetramethylenether mit vom Initiatorsystem und Reaktionsmedium bestimmten verschiedenen Endgruppen erhalten wird. PTHF weist daher die allgemeine Formel

HO-[(CH₂)₄-O]ₙ-(CH₂)₄-OH

auf, in der n eine ganze Zahl von 1 bis ungefähr 100 bedeutet, die das Molekulargewicht charakterisiert. Folgende Initiatorsysteme werden in der einschlägigen Literatur beschrieben (siehe z.B. G. Pruckmayer, Encyclopedia of Chemical Technology, Kirk-Othmer, 4. Auflage, Bd.19, S. 743-777).

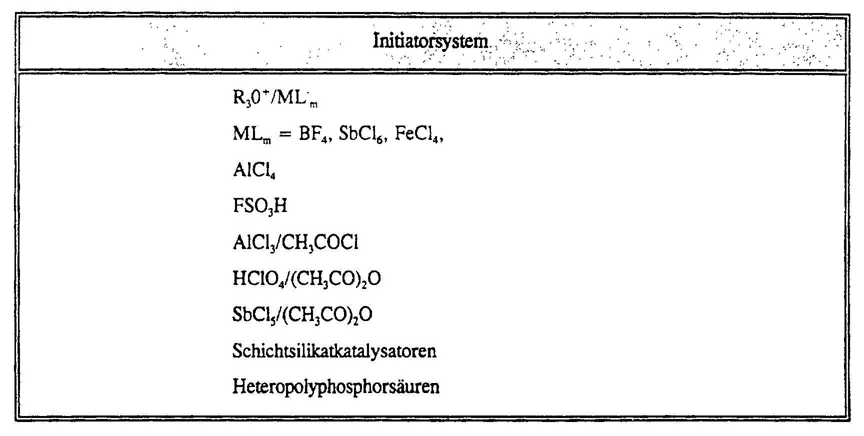

Um für das Haupteinsatzgebiet des PTHF, die Polyurethanchemie, Polyether zu erhalten, bei denen die Endgruppen Hydroxylgruppen sind, müssen die Endgruppen im primär erhaltenen Polymer daher durch geeignete Maßnahmen in Alkoholfunktionen umgewandelt werden.
Im Stand der Technik sind hierfür verschiedene Methoden bekannt geworden.
Eine der gängigsten Methoden stellt die durch alkalische Katalysatoren initiierte Umesterung der Acyloxygruppen enthaltenen Polymeren mit niederen Alkoholen dar. Für die Umesterung von Polytetrahydrofuran mit Methanol ist als wirksamer Umesterungskatalysator Natriummethylat bekannt. Außerdem ist bekannt, daß das Durchführen der Umesterung diskontinuierlich und kontinuierlich betrieben werden kann.
Bei der kontinuierlichen Verfahrensweise besteht allerdings das erhebliche Problem, daß die Reaktionslösung stark schäumt, was dazu führt, daß die nachgeschaltete Kolonne zur Abtrennung von Methanol und dem Azeotrop Methanol/Methylacetat durch die Anwesenheit von PTHF nicht mehr ihrer Trennaufgabe gerecht werden kann. Die Umesterung verläuft dann unkontrolliert, da erhebliche PTHF-Mengen unterschiedlichen Umsetzungsgrades zurückgefahren werden, so daß die Umesterung nur mit erheblich eingeschränkter Kapazität durchführbar ist.

Der Erfindung lag daher die Aufgabe zugrunde, ein Verfahren zur Herstellung hydroxylgruppenhaltiger Polymere und insbesondere zur Herstellung von Polytetrahydrofuran mit endständigen Hydroxylgruppen aus den entsprechenden acyloxygruppenhaltigen Polymeren durch Umesterung mit Alkoholen bereitzustellen, das im wesentlichen ohne Störungen durch Schaumbildung kontinuierlich mit einer Kapazität von zumindest 100% der Nennlast durchgeführt werden kann.

Diese Aufgabe wird erfindungsgemäß gelöst durch ein kontinuierlich durchgeführtes Verfahren, das dadurch gekennzeichnet ist, daß der zumindest eine Rührkessel über eine erste Leitung mit einem in etwa zylindrischen Behälter zur Aufnahme von aus dem Rührkessel entweichendem Schaum in der Weise gekoppelt wird, daß der Schaum mit einer ausreichenden Geschwindigkeit tangential in den Behälter eingeleitet wird, wobei der Durchmesser des Behälters so gewählt wird, daß er in etwa dem 2- bis 4-fachen Durchmesser der ersten Leitung entspricht, so daß der Schaum in eine gasförmige und eine flüssige Phase aufgetrennt wird, die jeweils über eine Leitung für die gasförmige Phase und eine Leitung für die flüssige Phase aus dem Behälter abgeführt werden.

Dabei hat der erfindungsgemäß vorgesehene zylindrische Behälter die Aufgabe, den aus dem jeweiligen Rührkessel entweichenden Schaum aufzunehmen und zu zerstören. Dieser Aufgabe wird jede Art von zylindrischen Behältern gerecht, in die der Schaum tangential mit einer ausreichenden Geschwindigkeit eingeleitet werden kann, und deren Durchmesser in etwa dem 2- bis 4-fachen Durchmesser der den Schaum zuführenden ersten Leitung entspricht. Als ein solcher zylindrischer Behälter kann daher beispielsweise auch ein einfacher Anschlußstutzen mit der entsprechenden Dimensionierung verwendet werden. Die Zerstörung des Schaumes bewirkt, daß er in eine gasförmige und eine flüssige Phase aufgetrennt wird, die über eine hierfür jeweils vorgesehene Leitung aus dem Behälter abgeführt werden.

In einer bevorzugten Ausführungsform des erfindungsgemäßen Verfahrens wird als zylindrischer Behälter zur Schaumzerstörung ein Naßzyklon verwendet, der sich dadurch auszeichnet, daß hohe Zentrifugalbeschleunigungen erreicht werden, die ein wirksames Auftrennen des Schaumes in eine flüssige und eine gasförmige Phase bewirken. Bei der Verwendung eines solchen Naßzyklons werden diese Zentrifugalkräfte durch die kinetische Energie der Strömung aufgebracht. Bei der Anwendung des erfindungsgemäßen Verfahrens hat es sich als vorteilhaft erwiesen, daß der Schaum mit einer Geschwindigkeit von etwa 5 bis 30 m/s in den zylindrischen Behälter bzw. den Naßzyklon eingeleitet wird. Das erfindungsgemäße Verfahren ist aber nicht auf die Verwendung von Naßzyklonen beschränkt. Es kann beispielsweise auch ein zylindrischer Behälter eingesetzt werden, bei dem diese Zentrifugalkräfte durch mechanische Energie, beispielsweise erzeugt durch außerhalb des eigentlichen zylindrischen Behälters angebrachte rotierende Teller, aufgebracht wird.

Wenngleich das erfindungsgemäße Verfahren auch mit nur einem Rührkessel betrieben werden kann, ist es doch für die vollständige Umsetzung des PTHF zweckmäßig, wenn gemäß einer weiteren Ausführungsform der Erfindung mehrere Rührkessel miteinander in Form einer Kesselkaskade verbunden werden.
In Hinblick auf die Kombination dieser Rührkessel mit dem zylindrischen Behälter stehen mehrere Möglichkeiten offen. So ist es beispielsweise möglich, daß alle Kessel der Kaskade über jeweils erste Leitungen, die miteinander gekoppelt sind, mit insgesamt nur einem zylindrischen Behälter verbunden werden. Es hat sich nämlich gezeigt, daß sogar nur ein zylindrischer Behälter ausreichen kann, um den aus mehreren Kesseln einer Kaskade entweichenden Schaum wirksam zu zerstören.

Für eine bessere Kapazitätsauslastung ist es jedoch zweckmäßig, alle Kessel der Kaskade über ihre jeweils erste Leitung mit je einem zylindrischen Behälter zu koppeln. Es besteht daneben weiterhin die Möglichkeit den apparativen Aufwand etwas zu vermindern und jeweils einen Teil der Kessel einer Kaskade zu einer Untereinheit zusammenzufassen, wobei dann jeweils die Untereinheiten mit einem zylindrischen Behälter gekoppelt sind.

Des weiteren kann erfmdungsgemäß vorgesehen sein, daß jede Leitung für das Abführen der flüssigen Phase von dem jeweiligen zylindrischen Behälter zurück in den zumindest einen Rührkessel mündet. Hierdurch ist zum einen gewährleistet, daß möglichst wenig PTHF- oder PTHF-Diacetat-Lösung verloren geht, und zum anderen kann damit die vollständige Umsetzung des zurückgeführten PTHF-Diacetats erreicht werden. Bei dieser Rückführung der flüssigen Phase aus dem jeweiligen zylindrischen Behälter sind je nach der Anzahl der verwendeten Rührkessel und der verwendeten zylindrischen Behälter verschiedene Kombinationen möglich. So kann beispielsweise, wenn die Kesselkaskade vier Rührkessel enthält, die mit einem zylindrischen Behälter gekoppelt sind, die Rückführung der flüssigen Phase auf den ersten, zweiten oder dritten Kessel vorgesehen sein. Vorzugsweise wird die flüssige Phase dann nicht in den vierten Kessel zurückgeführt, da unterschiedliche Umsetzungsgrade vorliegen können und durch die Rückführung in zumindest den dritten Kessel eine längere Verweilzeit und damit eine bessere Umsetzung des PTHF-Diacetats erreicht werden kann.

Wenn beispielsweise vier Rührkessel in einer Kesselkaskade miteinander verbunden werden, die zwei Untereinheiten bilden, wobei jede Untereinheit mit einem zylindrischen Behälter gekoppelt wird, dann sind für diese Kesselkaskade zwei zylindrische Behälter vorhanden und die Rückführung der flüssigen Phase kann jeweils auf den ersten Kessel oder jeweils auf den zweiten Kessel jeder Untereinheit vorgesehen werden.

Wenn für jeden Kessel einer Kesselkaskade jeweils ein zylindrischer Behälter vorgesehen wird, hat es sich als zweckmäßig erwiesen, die flüssige Phase auf den jeweils zugehörigen Kessel zurückzuführen.

Im folgenden soll die Erfindung anhand von zwei in der Zeichnung dargestellten Ausführungsbeispielen näher beschrieben werden.

Es zeigen:
- Figur 1:: ein schematisches Diagramm einer PTHF-Diacetat-Umesterung mit Schaumzerstörung durch Naßzyklone gemäß einer ersten Ausführungsform der Erfindung und
- Figur 2:: ein schematisches Diagramm einer PTHF-Diacetat-Umesterung mit Schaumzerstörung durch Naßzyklone gemäß einem zweiten Ausführungsbeispiel der Erfindung.

In den folgenden beschriebenen Ausführungsbeispielen erfolgt die Umesterung von PTHF-Diacetat unter Verwendung von Methanol (MeOH) und folgt in an sich bekannter Weise der Reaktionsgleichung:

PTHF-DiAc + 2MeOH PTHF + 2MeOAc

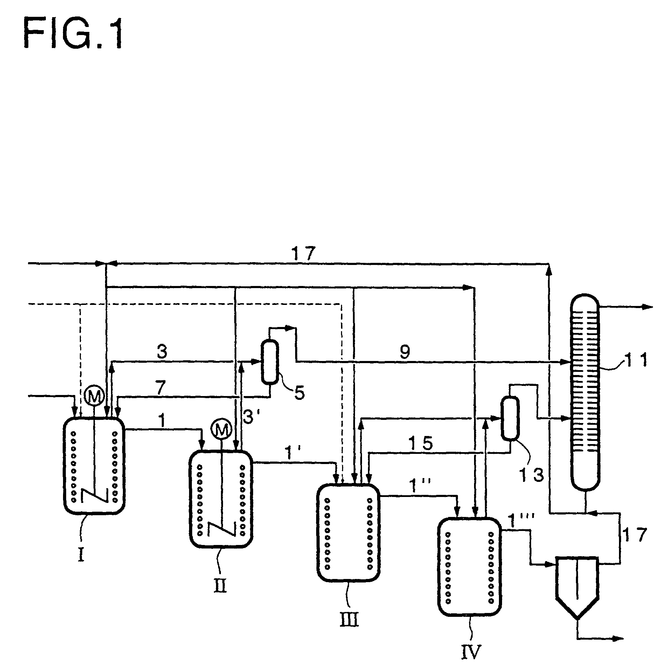

Dabei wird PTHF-Diacetat (PTHF-DiAc) einem ersten Rührkessel, der in den Figuren mit I bezeichnet ist, zugeführt, ebenso wie der Katalysator und Methanol.
Als Katalysator wird Natriummethylat verwendet. Rührkessel I ist über eine Leitung 1 mit einem zweiten Rührkessel II verbunden. Beide Rührkessel I, II weisen Zuführleitungen 3,3' zu einem insgesamt mit 5 bezeichneten Naßzyklon auf. Dabei ist Leitung 3' mit Leitung 3 verbunden, welche dann tangential während der Umesterung aus diesen Rührkesseln I, II entweichenden Schaum in den Naßzyklon 5 führt. An seinem unteren, das heißt dem Rührkessel II in Figur 1 zugewandten Ende, weist der Naßzyklon 5 eine Leitung 7 auf, zum Abführen der im Naßzyklon 5 durch die Schaumzerstörung gebildeten flüssigen Phase zurück in den Rührkessel I. An seinem entgegengesetzten oberen Ende weist der Naßzyklon 5 eine weitere Leitung 9 auf, die dazu dient, die bei der Schaumzerstörung bzw. dem Schaumbrechen von der flüssigen Phase getrennte gasförmige Phase zu der Kolonne 11 zu führen. Die Rührkessel I, II bilden eine erfindungsgemäße Untereinheit der gesamten Rührkesselkaskade.

Rührkessel II ist über eine Leitung 1' mit einem weiteren Rührkessel III verbunden, welcher wiederum kaskadenartig über die Leitung 1'' mit einem vierten Rührkessel IV verbunden ist. Die Kessel III, IV bilden eine weitere Untereinheit in dieser Kesselkaskade und sind ihrerseits mit einem Naßzyklon 13 in der für die erste Untereinheit beschriebenen Weise verbunden, wobei auch hier die Rückführleitung 15 für die flüssige Phase des im Naßzyklon 13 zerstörten Schaumes nicht in den letzten Rührkessel IV,
sondern in den davor geschalteten Rührkessel III geleitet wird, um einer möglicherweise nicht vollständigen Umesterung durch eine längere Verweilzeit in den Rührkesseln III, IV entgegenzuwirken.

Es ist jedoch durchaus auch möglich, daß die jeweiligen Rückführleitungen 7, 15 nicht zu den Kesseln I und III, sondern zu den Kesseln II und IV geführt werden. Mit Ausnahme des jeweils letzten Rührkessels IV der Kaskade ist es weiterhin möglich, die Rückführleitung 7 zu dem nächstfolgenden Rührkessel III der Kaskade zu leiten.

Die aus Leitung 1"' von Kessel IV austretende Lösung wird einer in der Zeichnung nicht dargestellten Katalysatorabtrennung zugeführt, das Methanol wird zurückgewonnen und über Leitung 17 wieder dem Kreislauf zur Durchführung des kontinuierlichen Verfahrens zur Verfügung gestellt. Nach erfolgter Molgewichtseinstellung verbleibt als gewünschtes Reaktionsprodukt das umgeesterte PTHF.

Mit der in Figur 1 beschriebenen kontinuierlich betriebenen Kaskade kann eine Kapazitätsauslastung von in etwa ≥ 100% der Nennlast erreicht werden. Zusätzlich wird in vorteilhafter Weise erreicht, daß die nachgeschaltete Kolonne 11, die zur Abtrennung von Methanol und dem Azeotrop Methanol/Methylacetat dient, nicht mehr durch Anwesenheit von PTHF-Diacetat in ihrer Trennleistung vermindert wird.

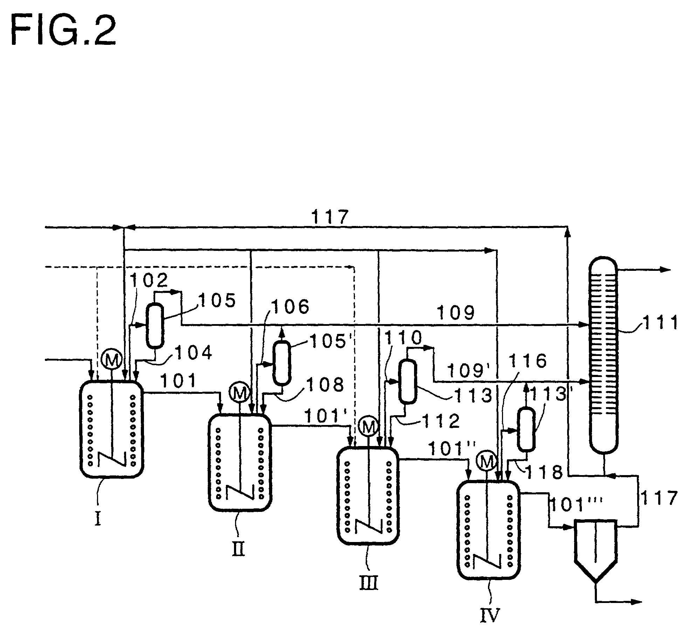

In Fig. 2 ist ein weiteres Ausführungsbeispiel dargestellt, wobei im folgenden nur die im Vergleich zu dem ersten Ausführungsbeispiel vorgenommenen Änderungen erläutert werden sollen. Die Bezugszahlen entsprechen daher - jeweils um 100 erweitert - in diesem zweiten Ausführungsbeispiel denen des ersten Ausführungsbeispiels, wenn gleiche oder vergleichbare Figurenteile angesprochen sind.

Die in Figur 2 dargestellte Rührkesselkaskade unterscheidet sich von dem in Figur 1 dargestellten Ausführungsbeispiel dadurch, daß jeder Rührkessel I bis IV mit einem Naßzyklon 105, 105', 113, 113' versehen wurde. Der aus jedem der Rührkessel I bis IV entweichende Schaum wird wieder tangential über Leitungen 102, 106, 110, 116 in den Naßzyklon 105, 105', 113, 113' geführt, und dieser weist jeweils eine Leitung 104, 108, 112, 118 für das Abführen der bei der Schaumzerstörung gebildeten flüssigen Phase zurück in den jeweiligen Kessel I, II, III, IV, dem der Naßzyklon zugeordnet ist, auf. Die jeweilige Leitung 109, 109' für das Abführen der gasförmigen Phase wird wiederum direkt zu der Kolonne 111 geführt, wobei in diesem Fall die Leitungen der Naßzyklone 105, 105' der Rührkessel I und II sowie der Naßzyklone 113, 113' der Kessel III und IV miteinander gekoppelt sind, so daß 2 Leitungen 109, 109' vorhanden sind.
Durch diese Betriebsweise ist es möglich, die Kapazität der Rührkesselkaskade auf erheblich über 100% der Nennlast zu steigern.

## Patentansprüche

1. Verfahren zur Herstellung hydroxylgruppenhaltiger Polymere, insbesondere zur Herstellung von Polytetrahydrofuran mit endständigen Hydroxylgruppen, aus den entsprechenden acyloxygruppenhaltigen Polymeren durch Umesterung mit Alkoholen, die in zumindest einem Rührkessel (I, II, III, IV) kontinuierlich durchgeführt wird, **dadurch gekennzeichnet, daß** der zumindest eine Rührkessel (I, II, III, IV) über eine erste Leitung (3, 3'; 102, 106, 110, 116) mit einem in etwa zylindrischen Behälter (5, 13; 105, 105', 113, 113') zur Aufnahme von aus dem Rührkessel (I, II, III, IV) entweichendem Schaum in der Weise gekoppelt wird, daß der Schaum mit einer ausreichenden Geschwindigkeit tangential in den Behälter (5, 13; 105, 105', 113, 113') eingeleitet wird, wobei der Durchmesser des Behälters so gewählt wird, daß er in etwa dem 2- bis 4-fachen Durchmesser der ersten Leitung (3, 3'; 102, 106, 110, 116) entspricht, so daß der Schaum in eine gasförmige und eine flüssige Phase aufgetrennt wird, die jeweils über eine Leitung (9; 109, 109') für die gasförmige Phase und eine Leitung (7, 15; 104, 108, 112, 118) für die flüssige Phase aus dem Behälter (5, 13; 105, 105', 113, 113') abgeführt werden.

2. Verfahren nach Anspruch 1, **dadurch gekennzeichnet, daß** als zylindrischer Behälter (5, 13; 105, 105', 113, 113') ein Naßzyklon verwendet wird.

3. Verfahren nach Anspruch 1 oder 2, **dadurch gekennzeichnet, daß** der Schaum mit einer Geschwindigkeit von in etwa 5 bis 30 m/s in den zylindrischen Behälter (5, 13; 105, 105', 113, 113') eingeleitet wird.

4. Verfahren nach einem der Ansprüche 1 bis 3, **dadurch gekennzeichnet, daß** mehrere Kessel (I, II, III, IV) miteinander in Form einer Kesselkaskade verbunden werden.

5. Verfahren nach Anspruch 4, **dadurch gekennzeichnet, daß** alle Kessel (I, II, III, IV) der Kaskade über jeweils eine erste Leitung (3, 3'; 102, 106, 110, 116) mit insgesamt nur einem zylindrischen Behälter gekoppelt werden.

6. Verfahren nach Anspruch 4, **dadurch gekennzeichnet, daß** alle Kessel (I, II, III, IV) der Kaskade über jeweils eine erste Leitung (102, 106, 110, 116) mit je einem zylindrischen Behälter (105, 105', 113, 113') gekoppelt werden.

7. Verfahren nach Anspruch 4, **dadurch gekennzeichnet, daß** jeweils ein Teil der Kessel (I, II, III, IV) einer Kaskade eine Untereinheit bildet, wobei jede Untereinheit mit jeweils einem zylindrischen Behälter (5, 13) gekoppelt wird.

8. Verfahren nach einem der Ansprüche 1 bis 7, **dadurch gekennzeichnet, daß** jede Leitung (7, 15; 104, 108, 112, 118) für das Abführen der flüssigen Phase zurück in den zumindest einen Rührkessel (I, II, III, IV) mündet.

## Claims

1. A process for preparing hydroxyl-containing polymers, in particular for preparing polytetrahydrofuran with terminal hydroxyl groups, from the corresponding acyloxy-containing polymers by transesterification with alcohols, which is carried out continuously in at least one stirred vessel (I, II, III, IV), which comprises at least one stirred vessel (I, II, III, IV) being coupled via a first line (3, 3'; 102, 106, 110, 116) to an approximately cylindrical container (5, 13; 105, 105', 113, 113') to receive foam escaping from the stirred vessel (I, II, III, IV) in such a manner that the foam is introduced tangentially into the container (5, 13; 105, 105', 113, 113') at an adequate velocity, the diameter of the container being chosen so that it corresponds approximately to 2 to 4 times the diameter of the first line (3, 3'; 102, 106, 110, 116) so that the foam is separated into a gaseous and a liquid phase, each of which is removed from the container (5, 13; 105, 105', 113, 113') through a line (9; 109, 109') for the gaseous phase and a line (7, 15; 104, 108, 112, 118) for the liquid phase.

2. A process as claimed in claim 1, wherein a cyclone separator is used as cylindrical container (5, 13; 105, 105', 113, 113').

3. A process as claimed in claim 1 or 2, wherein the foam is introduced at a velocity of approximately 5 to 30 m/s into the cylindrical container (5, 13; 105, 105', 113, 113').

4. A process as claimed in any of claims 1 to 3, wherein a plurality of vessels (I, II, III, IV) are connected together in the form of a cascade of vessels.

5. A process as claimed in claim 4, wherein all the vessels (I, II, III, IV) in the cascade are coupled in each case by a first line (3, 3'; 102, 106, 110, 116) to only one cylindrical container.

6. A process as claimed in claim 4, wherein each of the vessels (I, II, III, IV) in the cascade is coupled in each case by a first line (102, 106, 110, 116) to one cylindrical container (105, 105', 113, 113').

7. A process as claimed in claim 4, wherein some of the vessels (I, II, III, IV) in a cascade form a subunit, each subunit being coupled to one cylindrical container (5, 13).

8. A process as claimed in any of claims 1 to 7, wherein each line (7, 15; 104, 108, 112, 118) for removing the liquid phase returns to the at least one stirred vessel (I, II, III, IV).

## Revendications

1. Procédé pour la préparation de polymères contenant des groupes hydroxyle, en particulier pour la préparation du polytétrahydrofuranne contenant des groupes hydroxyle terminaux, à partir des polymères correspondants contenant des groupes acyloxy, au moyen d'une transestérification avec des alcools, que l'on réalise en continu dans au moins une cuve malaxeuse (I, II, III, IV), **caractérisé en ce que** l'on couple, au moyen d'une première conduite (3, 3' ; 102, 106, 110, 116), la cuve malaxeuse (I, II, III, IV) en nombre d'au moins une avec un récipient de forme approximativement cylindrique (5, 13 ; 105, 105', 113, 113') destiné à recevoir la mousse qui se dégage de la cuve malaxeuse (I, II, III, IV), en procédant de sorte que l'on introduit la mousse dans le récipient (5, 13 ; 105, 105', 113, 113') de manière tangentielle et à une vitesse suffisante, en choisissant le diamètre du récipient de sorte qu'il correspond approximativement au double et jusqu'au quadruple du diamètre de la première conduite (3, 3' ; 102, 106, 110, 116), afin de séparer la mousse en une phase gazeuse et en une phase liquide que l'on retire du récipient (5, 13 ; 105, 105', 113, 113'), la phase gazeuse et la phase liquide étant respectivement retirées par une conduite (9 ; 109, 109') et par une conduite (7, 15 ; 104, 108, 112, 118).

2. Procédé selon la revendication 1, **caractérisé en ce que** l'on emploie un hydrocyclone en tant que récipient cylindrique (5, 13 ; 105, 105', 113, 113').

3. Procédé selon la revendication 1 ou 2, **caractérisé en ce que** l'on introduit la mousse dans le récipient cylindrique (5, 13 ; 105, 105', 113, 113') à une vitesse comprise environ entre 5 m/s et 30 m/s.

4. Procédé selon une quelconque des revendications 1 à 3, **caractérisé en ce que** l'on couple plusieurs cuves (I, II, III, IV) l'une avec l'autre sous forme d'une cascade de cuves.

5. Procédé selon la revendication 4, **caractérisé en ce que** l'on couple toutes les cuves (I, II, III, IV) en cascade avec un seul récipient cylindrique, mais à chaque fois au moyen d'une première conduite (3, 3' ; 102, 106, 110, 116).

6. Procédé selon la revendication 4, **caractérisé en ce que** l'on couple toutes les cuves (I, II, III, IV) en cascade à chaque fois avec un récipient cylindrique (105, 105', 113, 113'), et à chaque fois au moyen d'une première conduite (3, 3' 102, 106, 110, 116).

7. Procédé selon la revendication 4, **caractérisé en ce qu'**une partie des cuves (I, II, III, IV) appartenant à une cascade forme une unité secondaire où l'on couple chaque unité secondaire avec à chaque fois un récipient cylindrique (5, 13).

8. Procédé selon l'une quelconque des revendications 1 à 7, **caractérisé en ce que** chaque conduite (7, 15 ; 104, 108, 112, 118) destinée à éliminer la phase liquide est ramenée dans la cuve malaxeuse (I, II, III, IV) qui est présente en nombre d'au moins une.
